# EUROPEAN PATENT APPLICATION

(11) **EP 1 923 885 A1**
(43) Date of publication of application: **21.05.2008**
(21) Application number: 06731740.4
(22) Date of filing: 13.04.2006
(51) Int. Cl.: G11B 21/12, G11B 21/22

(54) **BREAKAGE PREVENTION STRUCTURE OF LAMP**

(30) Priority: 09.09.2005 JP 2005261934
(71) Applicant: NOK Corporation, Minato-ku Tokyo 105-8585 (JP)
(72) Inventor: KANAYAMA, Tomoki, Fujisawa-shi, Kanagawa 251-0042 (JP); TAKAOKA, Shin, Fujisawa-shi, Kanagawa 251-0042 (JP); SEKI, Shota, Fujisawa-shi, Kanagawa 251-0042 (JP)
(74) Representative: TBK-Patent
(86) International application number: PCT/JP2006/307804
(87) International publication number: WO 2007/029372

(57) **Abstract**

In a plate insert type ramp (1) having a resin ramp body (2) and a metal reinforcement plate (12) buried in the ramp body (2) by insert molding, a breakage prevention structure of the ramp being capable of suppressing the occurrence of breakage in a resin near the peripheral edge part of the plate (12) due to heat shrinkage without increasing the wall thickness of the resin near the peripheral edge part of the plate (12) or without reducing the thickness of the plate (12). A part or all of the peripheral edge parts (12a), (12b), (12c), and (12d) of the reinforcement plate (12) are exposed from the ramp body (2) to the front surface beforehand to prevent the resin near the peripheral edge parts (12a), (12b), (12c), and (12d) of the reinforcement plate (12) from being broken due to heat shrinkage. The portions of the plate to be exposed are clearance portions (8) between a plurality of disk insertion parts (4) formed at one of four sides of the ramp body (2) and/or the peripheral edge parts of the ramp body (2) at its other three sides.

## Description

### BACKGROUND OF THE INVENTION

### Field of the Invention

The present invention relates to a ramp mechanism used for a data storage apparatus such as an HDD (a hard disk drive) or the like, and more particularly, a plate insert type ramp having a metal reinforcement plate buried in a resin ramp body by insert molding.

### Description of the Conventional Art

In a hard disk of a load/unload system, a ramp is provided near the disk as a refuge space of a head. As the material of a ramp, a resin material has been used for preventing metal contamination caused due to friction with a tab. However, since the size variation of the resin material by heat is large, there are problems at a high temperature that the disk is interfered with a top end part of the ramp, and tabs in a slope part are interfered each other. More particularly, when the number of disk is increased, the size of a ramp is also increased, so that the size of the resin material is more remarkably varied. As for the material of the ramp, LCP (a liquid crystal polymer) having an excellent heat resistance property, low out gas property and size stability has been used. However, the material of LCP is not enough to prevent varying of the size thereof. Thus, in order to solve this problem, a metal reinforcement plate is inserted into a ramp of an apparatus having much number of disks (refer to Patent Documents 1 and 2).

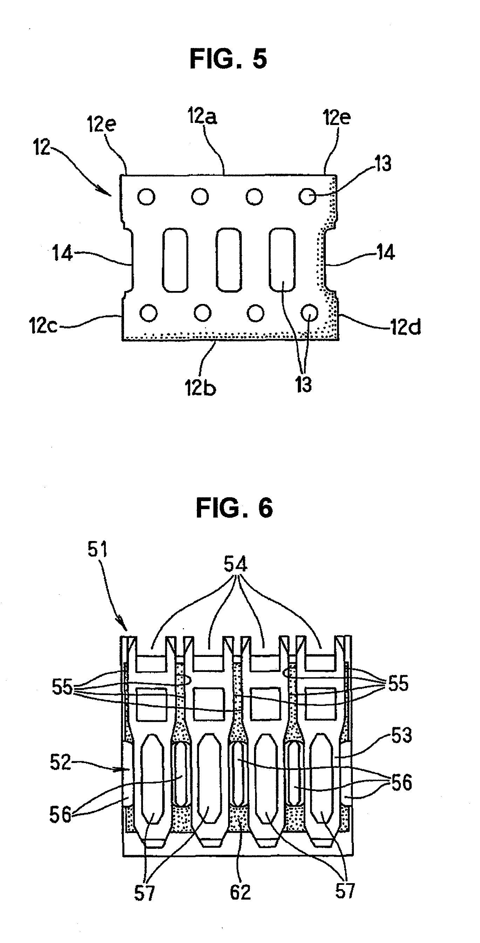

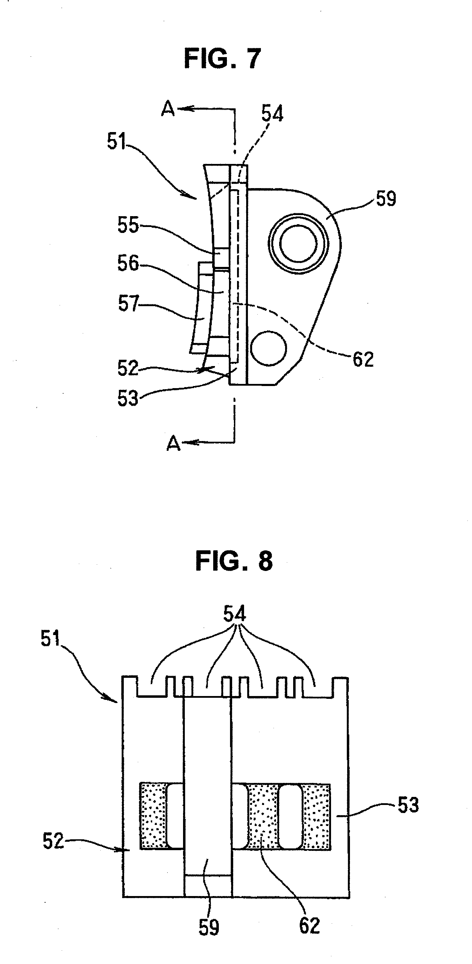

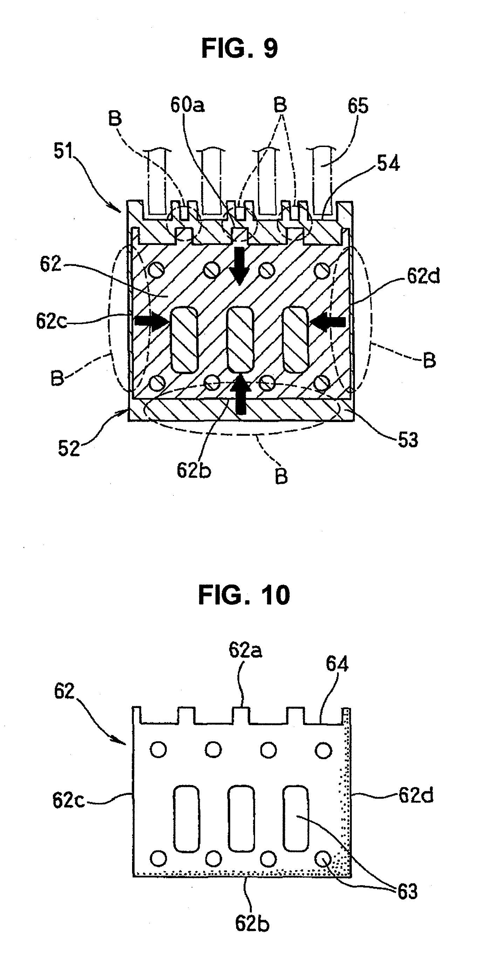

Figs. 6 to 10 illustrate one example of a plate insert type ramp 51. The ramp 51 has a metal reinforcement plate 62 buried inside a resin ramp body 52 by insert molding. In these figures, dots are added to the reinforcement plate 62 so as to easily identify the reinforcement plate 62 in the ramp body 51. The resin ramp body 52 integrally has a function part 53 for functioning as the ramp and an attaching part 59 for attaching the ramp to a providing position. The function part 53 is formed in an approximately rectangular plate shape, and the reinforcement plate 62 is buried in the plate thickness of the function part 53. One of four sides of the function part 53 has a necessary number of recessed disk insertion parts 54 for rotatably inserting peripheral edge parts of disks 65 (refer to Fig. 9) in a non-contacting state. Further, a surface opposite to the side of the attaching part 59 has respective necessary numbers of lift tab sliding surfaces 55, lift tab restricting parts 56, flexure restricting parts 57 and the like. As an illustrated single part in Fig. 10, the reinforcement plate 62 is formed in an approximately rectangular shape so as to be somewhat smaller than the function part 53, and has transparent holes 63, cutout parts 64 and the like. Further, as an illustrated cross section in Fig. 9, peripheral edge parts 62a, 62b, 62c and 62d at all four sides of the reinforcement plate 62 are buried in the resin.

On the other hand, the material of the ramp body 52 has been substituted from LCP to POM (polyacetal) excellent in friction and abrasion properties in recent years. However, in the case that the reinforcement plate 62 is inserted into the POM having a similar structure in the case of LCP, when the ramp is subjected to an endurance test at rapid temperature changes, e.g., from -40 degree C to 80 degree C, it is found out that breakage occurs at a contacting part of the ramp body 52 to the reinforcement plate 62 (the breakage does not occur in the case of the LCP).

The breakage occurs along the edge of the reinforcement plate 62 at portions having thin wall parts in the resin near the edge of the reinforcement plate 62. The breakage seems to occur by the following reason. Since the POM has not only less mechanical strength and heat resistance property but also larger size variation by temperature than those of the LCP (heat shrinkage occurs in the thick allow directions in Fig. 9), the thin wall parts (B parts in Fig. 9) of the ramp body 52 near the peripheral edge parts 62a, 62b, 62c and 62d of the reinforcement plate 62 cannot endure the stress induced by shrinkage difference with the reinforcement plate 62 having less size variation. Thus, the breakage occurs.

In order to prevent the occurrence of breakage, it is considered that the wall thickness of the resin near the plate peripheral edges 62a, 62b, 62c and 62d is to be increased. However, in this case, there are the following problems.

Even if when the thickness of the resin near the plate peripheral edges 62a, 62b, 62c and 62d is to be increased to prevent the occurrence of breakage, it is hard to secure such the wall thickness due to the restriction of a functional side and a product size. Further, the shrinkage difference is increased according to increase of the wall thickness, so that new breakage may occur.

Further, when the thickness of reinforcement plate 62 is reduced to prevent the breakage, an insert work is hard due to the thin thickness, and the reinforcement plate 62 may be deformed by an injection pressure. Further, the thickness of the reinforcement plate 62 is about 0.5 mm in the conventional structure, so this is an already thin enough. Thus, if the thickness is reduced more, there may be a problem of a functional side, that is, for size fixing.
Patent Document 1: Japanese Patent Application Laid Open No. 11-339411
Patent Document 2: Japanese Patent Application Laid Open No. 2001-23325

### SUMMARY OF THE INVENTION

### Problems to be Solved

The present invention is to solve the above-described problems, and an objective of the present invention is to provide a breakage prevention structure of a ramp capable of effectively suppressing the occurrence of breakage in a resin near plate peripheral edge parts by heat shrinkage without increasing the thickness of the resin near the plate peripheral edge parts or without reducing the thickness of the plate.

### Means for Solving the Problems

In order to effectively solve the above-described technical problems, a breakage prevention structure according to claim 1 of the present invention has the feature that, in a plate insert type ramp having a resin ramp body and a metal reinforcement plate buried in the ramp body by insert molding, a part or all of the peripheral edge parts of the reinforcement plate are exposed from the surface of the ramp body beforehand to prevent the resin near the peripheral edge parts of the reinforcement plate from being broken due to heat shrinkage.

Further, a breakage prevention structure according to claim 2 of the present invention has the feature that, in the above-described breakage prevention structure of a ramp according to claim 1, the reinforcement plate is exposed from the front surface at clearance portions between a plurality of disk insertion parts formed at one of four sides of the ramp body and/or the peripheral edge parts of the ramp body at its other three sides.

The reason why breakage easily occurs in the conventional resin ramp body 52 is that a part of the resin is adhered to the outer peripheral side of the peripheral edge parts 62a, 62b, 62c and 62d of the reinforcement plate 62 buried in the ramp body 52 so as to be easily stressed by heat shrinkage. On the other hand, according to the present invention, the peripheral edge parts of the reinforcement plate are exposed from the surface of the ramp body beforehand, so that there is no resin to be easily stressed at the outer peripheral side of the reinforcement plate. Therefore, according to the present invention, the occurrence of large stress in the resin can be prevented, and thus the occurrence of breakage in the resin ramp body can be effectively prevented.

In addition, as described in the undermentioned examples, the breakage easily occurs at the clearance portions, being thin wall parts in the ramp body between a plurality of disk insertion parts formed at one of four sides of the ramp body, and the peripheral edge parts of the ramp body at its other three sides. Thus, to cope with such problems, the reinforcement plate is preferably exposed from the clearance portions between a plurality of disk insertion parts formed at one of four sides of the ramp body and/or the peripheral edge parts of the ramp body at its other three sides.

### Effectiveness of the Invention

The present invention has the following effects.

In the breakage prevention structure of a ramp according to claim 1 of the present invention having the above-described structure, the peripheral edge part of the reinforcement part, which is an insert member, is exposed from the surface of the resin beforehand, so that there is no resin to be easily stressed by heat shrinkage at the outer peripheral side of the reinforcement plate. As a result of this, the occurrence of breakage in a resin which occurs due to heat shrinkage can be prevented. Therefore, since the breakage in the resin can be prevented by this new technique, the occurrence of breakage in a resin near plate peripheral edge part due to heat shrinkage can be effectively suppressed so as to attain the desired objective without increasing the wall thickness of the resin near the plate peripheral edge part or without reducing the thickness of the plate.

Further, according to the present invention, moldability of the product can be increased. In particular, at the time of molding the resin, since the flowability of the resin is not good at thin wall parts, poor filling of resin easily occurs. When injection pressure is increased in order to prevent this poor filling, burrs are easily generated at a divided part of a mold or matching surfaces of both molds. On the other hand, according to the present invention, a product does not have the thin wall part since the peripheral edge part of the plate is exposed from the front surface, so that occurrence of the poor filling can be suppressed even if not increasing the injection pressure so as to improve filling efficiency. Therefore, it can be effectively suppressed the occurrence of the burrs, and thus moldability of the product can be improved.

Further, according to the present invention, a consumption volume of the material can be reduced at a low level. In particular, the present invention does not have the resin material covering the plate peripheral edge part, so that the consumption volume of the resin material can be lowered.

Further, in the breakage prevention structure of a ramp according to claim 2 of the present invention, the reinforcement plate is exposed from the front surface at the clearance portions between a plurality of disk insertion parts formed at one of four sides of the ramp body and/or the peripheral edge parts of the ramp body at its other three sides. Thus, the occurrence of breakage by heat shrinkage at the clearance portions and/or the peripheral edge parts can be effectively prevented.

### BRIEF EXPLANATION OF DRAWINGS

[Fig. 1] A front view of a ramp according to an example of the present invention
[Fig. 2] A side view of the ramp of Fig. 1
[Fig. 3] A rear view of the ramp of Fig. 1
[Fig. 4] A cross sectional view of the ramp of Fig. 1 taken along the line C-C in Fig. 2
[Fig. 5] A single part view of a plate in the ramp of Fig. 1
[Fig. 6] A front view of a ramp according to a conventional example
[Fig. 7] A side view of the ramp of Fig. 6
[Fig. 8] A rear view of the ramp of Fig. 6
[Fig. 9] A cross sectional view of the ramp of Fig. 6 taken along the line A-A in Fig. 7
[Fig. 10] A single part view of a plate in the ramp of Fig. 6

### Description of Reference Numerals

1: Ramp
2: Ramp body
3: Function part
4: Disk insertion part
5: Lift tab sliding surface
6: Lift tab restricting part
7: Flexure restricting part
8: Clearance portion
9: Attaching part
10, 11: Hole parts
12: Reinforcement plate
12a: Upper side part (a peripheral edge part)
12b: Lower side part (a peripheral edge part)
12c, 12d: side parts (peripheral edge parts)
12e: Both end parts
13: Transparent hole
14: Cutout
15: Disk

### DETAILED DESCRIPTION OF PREFERRED EMBODIMENT

Then, an embodiment of the present invention will be concretely described with drawings.

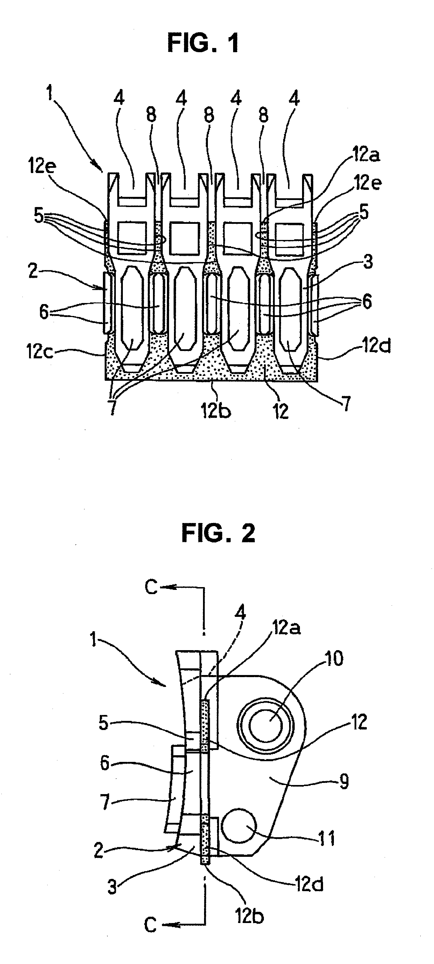

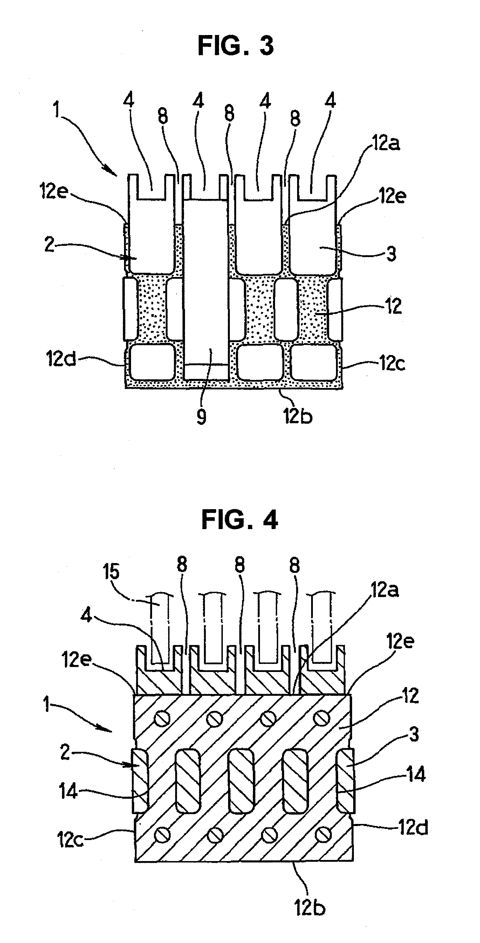

Fig. 1 is a front view of a plate insert type ramp 1 according an example of the present invention. Fig. 2 is a side view of the ramp 1, Fig. 3 is a rear view of the ramp 1, and Fig. 4 is a cross sectional view of the ramp 1 taken along the C-C line in Fig. 2. Further, Fig. 5 is a single part view of a reinforcement plate 12 in the ramp 1.

As illustrated in Figs . 1 to 4, the ramp 1 according to the embodiment has a ramp body 2 made of a resin material such as POM or the like, and a metal reinforcement plate 12 buried in the ramp body 2 by insert molding. In those figures, dots are added to the reinforcement plate 12 so as to easily identify the reinforcement plate 12 in the ramp body 2.

The resin ramp body 2 integrally has a function part 3 for functioning as the ramp and an attaching part 9 for attaching the ramp to a position where the ramp is to be provided. The function part 3 is formed in an approximately rectangular plate shape, and the reinforcement plate 12 is buried in the plate thickness of the function part 3.

One of four sides of the function part 3 has the necessary number of recessed disk insertion parts 4 for rotatably inserting peripheral edge parts (refer to Fig. 4) of disks 15 in a non-contacting state. Further, a surface opposite to the side of the attaching part 9 has respective necessary numbers of lift tab sliding surfaces 5 for slidably guiding and standing by a lift tab (not illustrated) at a top end of a head, lift tab restricting parts 6 working as a limiter to the lift tab, and flexure restricting parts 7 working as a limiter to a flexure (not illustrated).

The attaching part 9 is also formed in a plate shape and arranged so as to vertically cross to the plate of the function part 3. The attaching part 9 has a necessary number of hole parts 10 and 11 (two hole parts in the figure) in the plane thereof. The hole parts 10 and 11 are screw holes, through holes or the like and used for attaching the ramp 1.

On the other hand, the reinforcement plate 12 is formed in an approximately rectangular shape which is somewhat smaller than the function part 3, and has transparent holes 13 and cutouts 14 as illustrated in a single part view of Fig. 5. Further, as illustrated in a cross sectional view in Fig. 4, peripheral edge parts 12a, 12b, 12c and 12d are exposed from a front surface as follows.

As for the upper side part 12a in Fig. 4, which is positioned at the disk insertion part 4 side, the upper side part 12a is exposed from the front surface of the ramp body at clearance portions 8 between a plurality of disk insertion parts 4 and at both end parts 12e of the upper side part 12a.

Further, as for the lower side part 12b being opposite side of the disk insertion parts 4 in Fig. 4, the whole lower side part 12b is exposed from the front surface of the ramp body.

Further, as for the side parts 12c and 12d on the right and left sides in Fig. 4, the parts except the cutouts 14 formed at the side parts 12c and 12d are exposed from the front surface of the ramp body.

Therefore, as for the lower side part 12b and side parts 12c and 12d, while the peripheral edge parts of the ramp body 2 are conventionally formed by a resin, the peripheral edge parts 12b, 12c and 12d of the reinforcement plate 12 in this embodiment are exposed to the front surface. Thus, the peripheral edge parts of the ramp body 2 are formed with the peripheral edge parts 12b, 12c and 12d of the reinforcement plate 12.

As a result of this, the resin adhered at the outer peripheral sides of the peripheral edge parts 12a, 12b, 12c and 12d of the reinforcement plate 12 are limited to the minimum required for functions, so that almost all parts of the peripheral edge parts 12a, 12b, 12c and 12d are exposed from the front surface of the ramp body. Thus, there are almost no resin to be stressed by heat shrinkage at the outer peripheral sides of the peripheral edge parts 12a, 12b, 12c and 12d at the stage of production the ramp. Therefore, since the storing of the high stress in the resin provided at the outer peripheral sides of the peripheral edge parts 12a, 12b, 12c and 12d can be prevented, the occurrence of breakage in the resin ramp body 2 by heat shrinkage can be effectively prevented.

Further, according to the ramp 1 having the above-described structure, the moldability of the product of the ramp 1 can be improved, and the consumption volume of a resin material can be reduced.

In addition, in the present invention, the material of the resin ramp body 2 is not restricted to the POM, and the other kinds of resin materials can be used. The POM has been mainly used as the material of a resin ramp in the recent technique as described above, but the problem of breakage by heat shrinkage is not limited only in the case of POM.

## Claims

1. A breakage prevention structure of a plate insert type ramp (1) having a resin ramp body (2) and a metal reinforcement plate (12) buried in the ramp body (2) by insert molding, wherein a part or all of the peripheral edge parts (12a), (12b), (12c), and (12d) of the reinforcement plate (12) are exposed from the front surface of the ramp body (2) beforehand to prevent the resin near the peripheral edge parts (12a), (12b), (12c), and (12d) of the reinforcement plate (12) from being broken due to heat shrinkage.

2. The breakage prevention structure of a ramp as claimed in claim 1, wherein the reinforcement plate (12) is exposed from the front surface of clearance portions (8) between a plurality of disk insertion parts (4) formed at one of four sides of the ramp body (2) and/or the peripheral edge parts of the ramp body (2) at its other three sides.
